# EUROPÄISCHE PATENTSCHRIFT

(11) **EP 0 756 678 B1**
(45) Veröffentlichungstag und Bekanntmachung des Hinweises auf die Patenterteilung: **08.07.1998**
(21) Anmeldenummer: 95917324.6
(22) Anmeldetag: 15.04.1995
(51) Int. Cl.: F16H 61/16

(54) **HYDRAULISCHE SCHALTEINRICHTUNG FÜR EIN MEHRGÄNGIGES FAHRZEUGGETRIEBE**
HYDRAULIC CHANGING DEVICE FOR A MULTI-RATIO VEHICLE GEARBOX
SYSTEME HYDRAULIQUE POUR CHANGER LES VITESSES D'UNE BOITE DE VEHICULE A PLUSIEURS RAPPORTS

(30) Priorität: 22.04.1994 DE 4414141
(43) Veröffentlichungstag der Anmeldung: 05.02.1997
(73) Patentinhaber: ZF FRIEDRICHSHAFEN Aktiengesellschaft, 88038 Friedrichshafen (DE)
(72) Erfinder: GEBHARD, Wolfgang, D-88048 Friedrichshafen (DE); HEILIG, Eduard, D-88048 Friedrichshafen (DE)
(86) Internationale Anmeldenummer: EP9501422
(87) Internationale Veröffentlichungsnummer: WO9529351

(56) Entgegenhaltungen:
- DE-A- 1 946 496
- DE-A- 2 040 195
- DE-A- 4 011 033
- FR-A- 2 294 364
- US-A- 3 738 198
- US-A- 3 937 107

## Beschreibung

Die Erfindung betrifft eine hydraulische Schalteinrichtung für ein mehrgängiges Fahrzeuggetriebe nach dem Oberbegriff des Anspruches 1.

Aus der DE-A 40 11 033 ist eine hydraulische Schalteinrichtung für ein mehrgängiges Fahrzeuggetriebe der angesprochenen Gattung bekannt. Um unzulässige Rückschaltungen zu verhindern, enthält die Schalteinrichtung ein Schaltventil und ein Steuerventil. Das Schaltventil ist über ein Gangschaltventil mit einer Servopumpe bzw. einem Behälter verbunden. Eine weitere Verbindung besteht zu Betätigungseinrichtungen, mit denen die einzelnen Gänge des Fahrzeuggetriebes geschaltet werden. Das Steuerventil ist über eine Leitung mit einer Niederdruckpumpe, die motordrehzahlabhängig arbeitet, verbunden. Die beiden möglichen Schaltstellungen des Schaltventils werden - motordrehzahlabhängig - vom Steuerventil beeinflußt. Wird bei eingeschaltetem schnellen Gang und bei einer Motordrehzahl, die oberhalb eines bestimmten Grenzwertes liegt, das Gangschaltventil betätigt, um den langsamen Gang zu schalten, wird das Schaltventil in seiner momentanen Schaltstellung gehalten und somit eine Rückschaltung verhindert. Diese findet erst statt, wenn die Motordrehzahl den vorgegebenen Grenzwert, bei dem das Steuerventil seine Schaltstellung wechselt, erreicht hat. Durch diese Rückschaltsperre wird ein Überdrehen des Antriebsmotors verhindert, das auftreten würde, wenn das Fahrzeuggetriebe bei hochdrehendem Antriebsmotor aus dem schnellen Gang in den langsamen Gang zurückgeschaltet werden würde.

Der vorliegenden Erfindung liegt die Aufgabe zugrunde, die bekannte hydraulische Schalteinrichtung konstruktiv und baulich zu vereinfachen.

Die der Erfindung zugrunde liegende Aufgabe wird durch eine hydraulische Schalteinrichtung mit den Merkmalen nach dem Hauptanspruch gelöst. Die Ansprüche 2 bis 6 betreffen vorteilhafte Ausgestaltungen des Gegenstandes nach dem Hauptanspruch.

Weitere, für die Erfindung wesentliche Merkmale und die daraus resultierenden Vorteile sind der nachfolgenden Beschreibung eines Ausführungsbeispieles einer hydraulischen Schalteinrichtung am Beispiel eines zweigängigen Fahrzeuggetriebes für einen Mobilbagger oder Radlader zu entnehmen.
Es zeigen:
- Fig. 1: eine schematische, teilweise geschnittene Ansicht einer hydraulischen Schalteinrichtung bei geschaltetem langsamen Gang;
- Fig. 2 bis Fig. 4: die hydraulische Schalteinrichtung nach Fig. 1 in unterschiedlichen Schaltstellungen unter Berücksichtigung der jeweiligen Betriebsverhältnisse.

Eine Servopumpe 10 fördert aus einem Vorratsbehälter 11 über ein Gangschaltventil 2 Druckmittel zu einem Sperrventil 1. Hierzu ist das Gangschaltventil 2 über eine erste Arbeitsleitung 12 und eine zweite Arbeitsleitung 13 an einen ersten Ringkanal 14 und an einen zweiten Ringkanal 15 angeschlossen. Ein dritter Ringkanal 18 steht mit dem ersten Ringkanal 14 und ein vierter Ringkanal 19 steht mit dem zweiten Ringkanal 15 in Verbindung.

Vom dritten Ringkanal 18 führt eine Verbindungsleitung 17 zu einer Gangbetätigung 4 (erster Gang) des selbst nicht dargestellten Fahrzeuggetriebes.

Vom vierten Ringkanal 19 führt eine Verbindungsleitung 16 zu einer Gangbetätigung 3 (zweiter Gang).

In einem Ventilzylinder 27 ist ein Steuerschieber 26 eines Sperrventils 1 axial verschiebbar angeordnet. Der Ventilzylinder 27 ist durch eine Schraube 28 verschlossen.

Der Steuerschieber 26 kann durch Verstellkräfte, die an seinen Stirnflächen angreifen, in zwei Schaltstellungen überführt werden.

An der in der Zeichnung obenliegenden Stirnfläche des Steuerschiebers 26 greift eine Verstellkraft an, die vom herrschenden Druck in einem Niederdruckraum 23 abhängt.

An der gegenüberliegenden Stirnfläche liegt eine Regelfeder 33 an, die eine Verstellkraft ausübt, die der vorstehend erwähnten hydraulischen Verstellkraft entgegengerichtet ist.

Der Niederdruckraum 23 steht über einen Niederdruckkanal 24 mit einer Niederdruckpumpe 20 in Verbindung. Die Niederdruckpumpe wird motordrehzahlabhängig angetrieben und erzeugt, in Abhängigkeit von der Eingangsdrehzahl, einen Öldruck. Der maximale Förderdruck der Niederdruckpumpe 20 wird durch ein Druckbegrenzungsventil 7 begrenzt. Erreicht der Niederdruck einen Maximalwert, öffnet das Druckbegrenzungsventil 7 und gibt, wie dies aus der Zeichnung ersichtlich ist, eine Rücklaufleitung zu einem Vorratsbehälter 21 frei.

Von einem Ringkanal 35 im Ventilzylinder 27 führt eine Leitung 38 zu einem Wechselventil 6. Weitere Leitungen 39 und 40 verbinden das Wechselventil 6 mit dem vierten Ringkanal 19 bzw. zweiten Ringkanal 15.

Eine weitere Leitung 41 führt vom dritten Ringkanal 18 zu einem Leckageventil 5. Vom Leckageventil 5 führt eine Verbindung 42 zum Wechselventil 6.

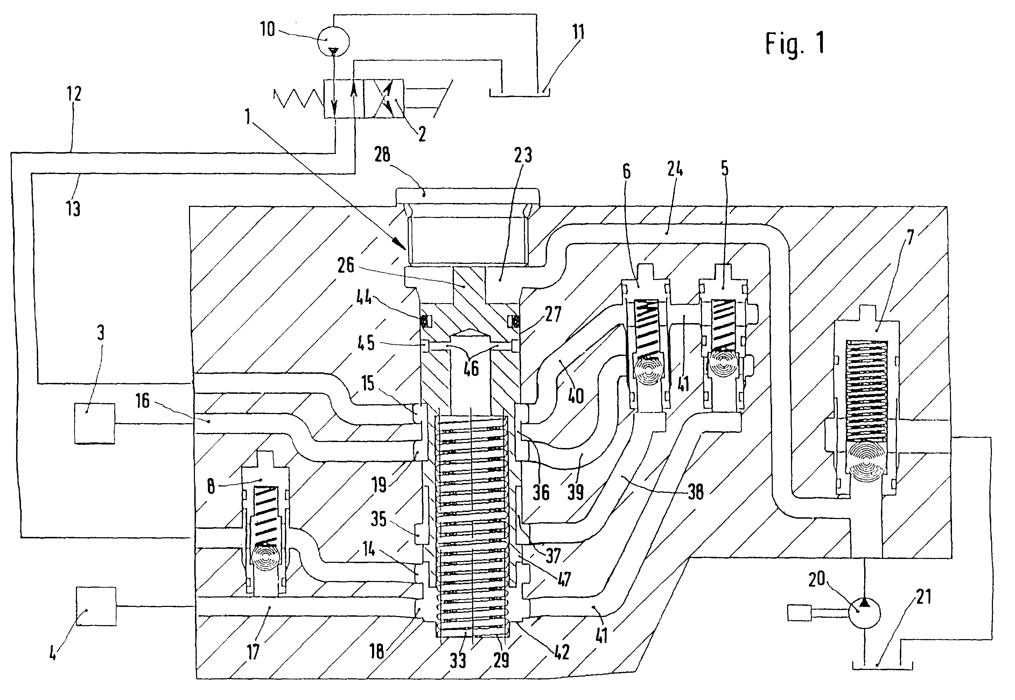

### Schalten des ersten Ganges, Fig. 1:

Das Gangschaltventil 2 ist so geschaltet, daß die Servopumpe 10 mit der ersten Arbeitsleitung 12 verbunden ist. Der in der ersten Arbeitsleitung 12 herrschende Druck schließt das Rückschlagventil 8 zur Verbindungsleitung 17 hin. Das Druckmittel gelangt über den ersten Ringkanal 14 und den dritten Ringkanal 18 und die Verbindungsleitung 17 zur Gangbetätigung 4. Der erste Gang ist geschaltet.

Von der Gangbetätigung 3 besteht über die Verbindungsleitung 16, den vierten Ringkanal 19 und den zweiten Ringkanal 15 und die zweite Arbeitsleitung 13 und das geöffnete Gangschaltventil 2 eine Verbindung zum Vorratsbehälter 11. Dies bedeutet, daß der Druck in der Gangbetätigung 3 zum Vorratsbehälter 11 hin abgebaut wird. Somit ist diese Gangbetätigung 3 drucklos.

Bei Drehzahlen (Fahrgeschwindigkeiten) unterhalb des Rückschaltpunktes ist der Förderdruck der Niederdruckpumpe 20 so gering, daß die Kraft der Regelfeder 33 überwiegt und diese den Steuerschieber 26 - wie aus der Zeichnung ersichtlich - gegen die Schraube 28 drückt. Dabei gibt der Steuerschieber 26 die Verbindung in der erwähnten Weise von der ersten Arbeitsleitung 12 über die Verbindungsleitung 17 zur Gangbetätigung 4 frei. Von der Gangbetätigung 3 ist ein Druckabbau über die Verbindungsleitung 16 zur zweiten Arbeitsleitung 13 und zum Vorratsbehälter 11 hin möglich.

Bei Drehzahlen (Fahrgeschwindigkeiten) oberhalb des Rückschaltpunktes ist der Förderdruck der Niederdruckpumpe 20 so groß, daß er die Kraft der Regelfeder 33 überwiegt und somit den Steuerschieber 26 nach unten (bezogen auf die Zeichnung) verschiebt. Der Steuerschieber 26 wird gegen einen Anschlag 42 gedrückt.

In der zweiten Schaltstellung des Steuerschiebers 26 trennt ein Steuerkantenpaar 47 den ersten Ringkanal 14 vom dritten Ringkanal 18.

Während in der abgebildeten ersten Schaltposition des Steuerschiebers 26 ein Schalten des ersten und zweiten Ganges möglich ist, ist in der zweiten Schaltstellung des Steuerschiebers 26 eine Schaltung vom ersten in den zweiten Gang nicht möglich.

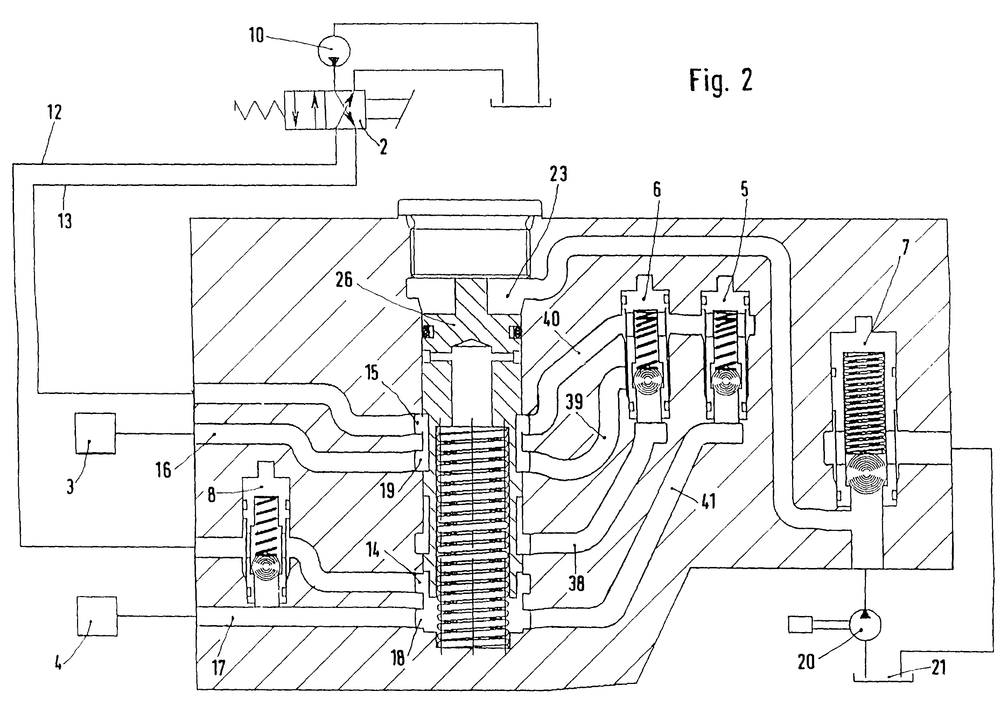

### Schalten des zweiten Ganges unterhalb des Rückschaltpunktes, Fig. 2:

Das rechts liegende Feld des Gangschaltventils 2 ist geschaltet. Das von der Servopumpe 10 geförderte Druckmittel gelangt über die zweite Arbeitsleitung 13 zum zweiten Ringkanal 15. Von hier aus besteht eine Verbindung zum vierten Ringkanal 19 und über die Verbindungsleitung 16 zur Gangbetätigung 3. Über die Leitung 40 und das zur Leitung 38 hin geschlossene Wechselventil 6 strömt das Druckmittel ferner über die Leitung 39 zur Verbindungsleitung 16 und, vom Wechselventil 6 ausgehend, über die Leitung 41 zum Leckageventil 5. Das Leckageventil 5 wird zur Leitung 41 hin geschlossen.

Der in der Gangbetätigung 4 herrschende Druck wird über die Verbindungsleitung 17 über das geöffnete Rückschlagventil 8 und die erste Arbeitsleitung zum Vorratsbehälter 11 hin abgebaut.

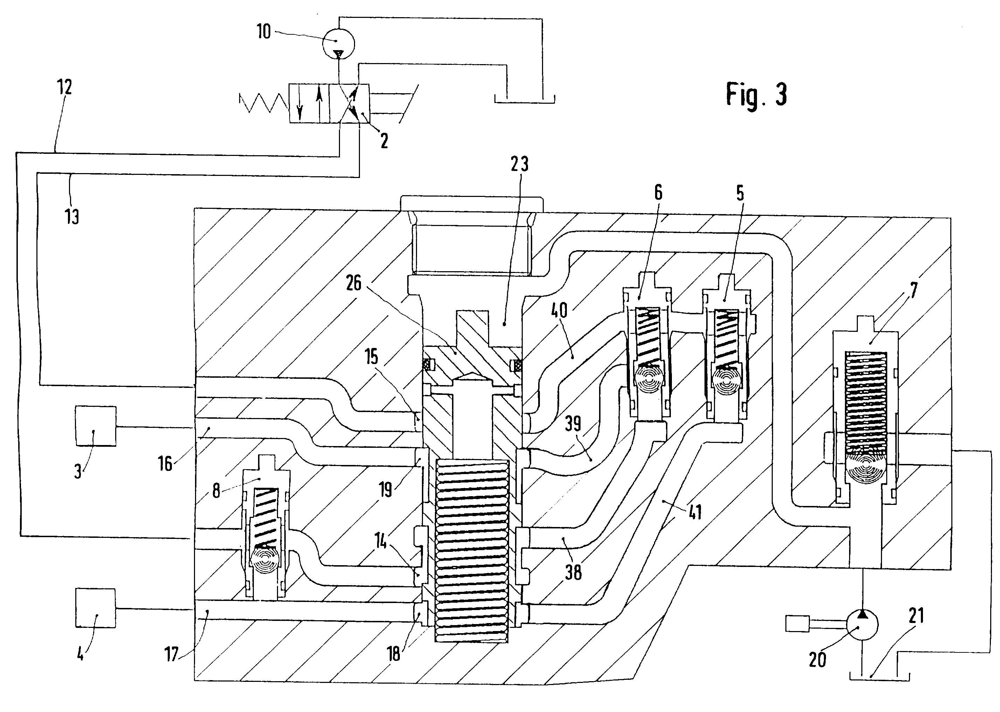

### Schalten des zweiten Ganges oberhalb des Rückschaltpunktes, Fig. 3:

Die Stellung des Gangschaltventils 2 entspricht derjenigen nach Fig. 2. Das Druckmittel gelangt über die zweite Arbeitsleitung zum Wechselventil 6 und von hier aus über die Leitung 39 durch die Verbindungsleitung 16 zur Gangbetätigungseinrichtung 3. Das Wechselventil 6 und das Leckageventil 5 sind zu den Leitungen 38 und 41 hin geschlossen. Der in der Gangbetätigung 4 herrschende Druck wird über die Verbindungsleitung 17 und das geöffnete Rückschlagventil 8, die erste Arbeitsleitung 12 und das Gangschaltventil 2 zum Vorratsbehälter 11 hin abgebaut. Da das Steuerkantenpaar 47 den ersten Ringkanal 14 vom dritten Ringkanal 18 trennt, ist ein Schalten des ersten Ganges nicht möglich.

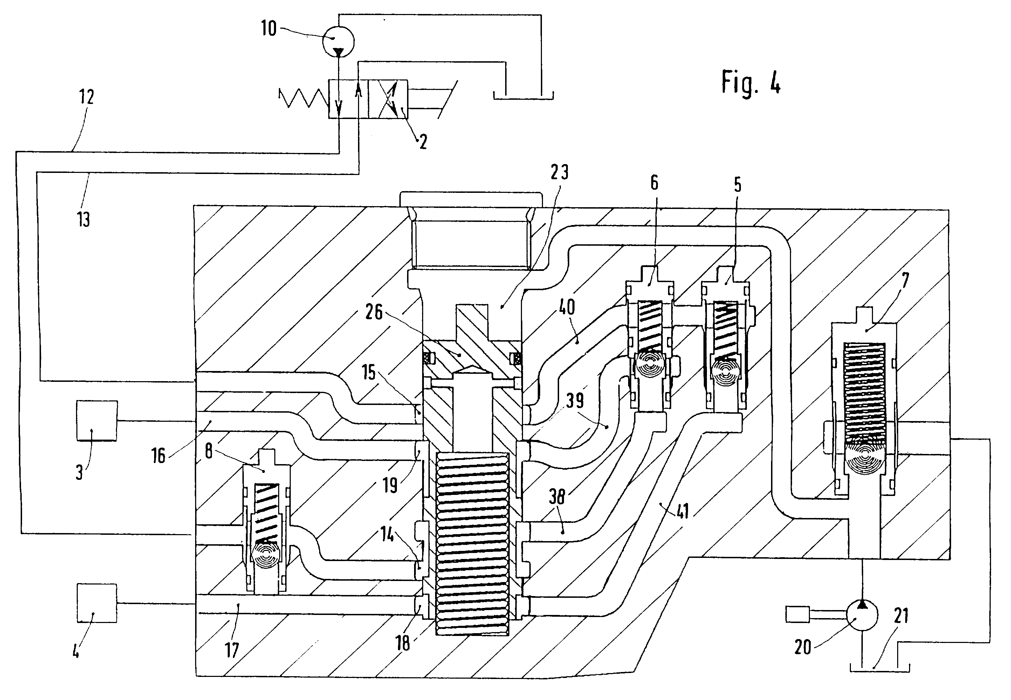

### Rückschaltung vom zweiten in den ersten Gang oberhalb des Rückschaltpunktes bzw. Vorwählen des ersten Ganges, Fig. 4:

Wenn die Drehzahl des Antriebsmotors (Fahrgeschwindigkeit) oberhalb des Rückschaltpunktes bei geschaltetem zweiten Gang liegt, muß eine Rückschaltung verhindert werden. Wenn der erste Gang vorgewählt ist und die Antriebsdrehzahl so weit abgesunken ist, daß sie unterhalb des Rückschaltpunktes liegt, muß die Rückschaltung vom zweiten in den ersten Gang selbsttätig erfolgen.

Bei vorgewähltem ersten Gang oberhalb des Rückschaltpunktes ist das Gangschaltventil 2 so geschaltet, daß die Servopumpe 10 mit der ersten Arbeitsleitung 12 verbunden ist. Das Druckmittel gelangt zum ersten Ringkanal 14. Das Rückschlagventil 8 ist zur Verbindungsleitung 17 hin geschlossen. Vom ersten Ringkanal 14 aus strömt das Druckmittel über den Ringkanal 35, die Leitung 38 zum Wechselventil 6, das in seiner geöffneten Stellung gehalten wird. Von hier aus gelangt das Druckmittel über die Leitung 39 und den vierten Ringkanal 19 sowie die Verbindungsleitung 16 zur Gangbetätigungseinrichtung 3. Der zweite Gang ist geschaltet.

Eventuelle Leckage am Steuerkantenpaar 47 wird zur Leitung 41 hin abgebaut. Der in der Gangbetätigungseinrichtung 4 herrschende Druck wird über die Verbindungsleitung 17, die Leitung 41, das geöffnete Leckageventil 5, die Leitung 41 und von hier aus über das Wechselventil 6 zur Leitung 40 zur zweiten Arbeitsleitung 13 und schließlich zum Vorratsbehälter 11 hin abgebaut. Da die Ringkanäle 14 und 18 voneinander getrennt sind, kann nicht in den ersten Gang zurückgeschaltet werden.

Sinkt die Antriebsdrehzahl unter den Rückschaltpunkt, so sinkt der im Niederdruckraum 23 herrschende Druck. Die Regelfeder 33 bewegt den Steuerschieber 26 nach oben. Während dies geschieht, gibt das Steuerkantenpaar 47 die Verbindung der Ringkanäle 14 und 18 frei. Das Druckmittel gelangt, ausgehend von der ersten Arbeitsleitung 12, über den ersten Ringkanal 14 zum dritten Ringkanal 18 und von hier aus über die Verbindungsleitung 17 zur Gangbetätigung 4. Der erste Gang wird geschaltet. Die hydraulische Schalteinrichtung befindet sich dann in einem der Fig. 1 entsprechenden Zustand.

Da der Steuerschieber 26 genau am Rückschaltpunkt eine axiale Verschiebebewegung ausführt, muß die Reibung einer Dichtung 44 so gering wie möglich gehalten werden. Die Reibung dieser Dichtung ist geringer, wenn sie drucklos ist. Durch eine Entlastungsnut 45 wird über Bohrungen 46 der Hochdruck im Moment des Schaltpunktes von der Dichtung 44 ferngehalten. Somit wird die Reibung der Dichtung minimiert.

### Bezugszeichen

- 1: Sperrventil
- 2: Gangschaltventil
- 3: Gangbetätigung
- 4: Gangbetätigung
- 5: Leckageventil
- 6: Wechselventil
- 7: Druckbegrenzungsventil
- 8: Rückschlagventil
- 9: -
- 10: Servopumpe
- 11: Vorratsbehälter
- 12: erste Arbeitsleitung
- 13: zweite Arbeitsleitung
- 14: erster Ringkanal
- 15: zweiter Ringkanal
- 16: Verbindungsleitung
- 17: Verbindungsleitung
- 18: dritter Ringkanal
- 19: vierter Ringkanal
- 20: Niederdruckpumpe
- 21: Druckmittelvorratsbehälter
- 22: -
- 23: Niederdruckraum
- 24: Niederdruckkanal
- 25: -
- 26: Steuerschieber
- 27: Ventilzylinder
- 28: Schraube
- 29: Federraum
- 30: -
- 31: -
- 32: -
- 33: Regelfeder
- 34: Ringkanal
- 35: Ringkanal
- 36: erste Steuernut
- 37: zweite Steuernut
- 38: Leitung
- 39: Leitung
- 40: Leitung
- 41: Leitung
- 42: Anschlag
- 43: -
- 44: Dichtung
- 45: Entlastungsnut
- 46: Bohrungen
- 47: Steuerkantenpaar
- 48: -
- 49: -
- 50: -

## Patentansprüche

1. Hydraulische Schalteinrichtung für ein mehrgängiges Fahrzeuggetriebe mit Gangbetätigungen (3, 4), die den einzelnen Gängen zugeordnet sind und über ein Gangschaltventil (2) mit einem Druckmittel beaufschlagt werden, und mit einem Sperrventil (1), das zwischen das Gangschaltventil (2) und die Gangbetätigungen (3, 4) geschaltet ist und oberhalb einer für den jeweiligen zu schaltenden Gang zugelassenen Fahrgeschwindigkeit die Druckmittelbeaufschlagung der entsprechenden Gangbetätigung (3, 4) sperrt und mittels einem Wechselventil (6) die Druckmittelbeaufschlagung der Gangbetätigung (3) des geschalteten Gangs beibehält, obwohl das Gangschaltventil (2) das Druckmittel für den gesperrten Gang freigibt, und mit einer Niederdruckpumpe (20), die in Abhängigkeit von der Fahrzeuggeschwindigkeit angetrieben wird und einen Steuerschieber (26) des Sperrventils (1) mit einem Druck beaufschlagt, der von der Fahrzeuggeschwindigkeit abhängt und dieser Steuerschieber (26) entgegen der Kraft der Regelfeder (33) oberhalb eines vorgegebenen, fahrgeschwindigkeitsabhängigen Drucks von einer ersten Endlage in die zweite verschoben wird, dadurch **gekennzeichnet**, daß eine erste Arbeitsleitung (12) und eine zweite (13) vom Schaltventil (2) ausgehend in einen ersten (14) und zweiten Ringkanal (15) eines Ventilzylinders (27) des Sperrventils (1) münden, die in der von der Regelfeder (33) bestimmten Endlage des Steuerschiebers (26) über eine erste (36) und zweite Steuernut (37) im Steuerschieber (26) mit einem dritten (18) und einem vierten Ringkanal (19) verbunden sind, von denen eine erste (16) und eine zweite Verbindungsleitung (17) zu der ersten (3) und zweiten Gangbetätigung (4) führen, daß an die Ringkanäle (14, 18) das Wechselventil (6) angeschlossen ist, das in der zweiten Endlage des Steuerschiebers (26) bei einer Druckbeaufschlagung über die erste (12) oder zweite Arbeitsleitung (13) Druckmittel zur ersten Gangbetätigung (3) für den höheren Gang mit der kleineren Untersetzung leitet.

2. Schalteinrichtung nach Anspruch 1, dadurch **gekennzeichnet**, daß an einer Stirnseite des Steuerschiebers (26) der Ventilzylinder (27) des Sperrventils (1) einen Niederdruckraum (23) bildet, den ein Niederdruckkanal (24) mit der Niederdruckpumpe (20) verbindet, und ein Druckbegrenzungsventil den maximalen Niederdruck bestimmt.

3. Schalteinrichtung nach Anspruch 1 oder 2, dadurch **gekennzeichnet**, daß der Steuerschieber (26) zwischen dem Niederdruckraum (23) und der ersten Steuernut (36) eine Dichtung (44) aufweist, und zwischen dieser und der ersten Steuernut (36) eine Entlastungsnut (45) vorgesehen ist, die über Bohrungen (46) mit dem Druckmittelvorratsbehälter (11) verbindbar ist.

4. Schalteinrichtung nach Anspruch 3, dadurch **gekennzeichnet**, daß die Regelfeder (33) in einem Federraum (29) des Steuerschiebers (26) untergebracht ist, der mit den Bohrungen (46) in Verbindung steht, und sich durch eine stirnseitige Öffnung am Ventilzylinder (27) abstützt.

5. Schalteinrichtung nach Anspruch 1, dadurch **gekennzeichnet**, daß die zweite Verbindungsleitung (17) über ein Rückschlagventil (8) mit der zweiten Arbeitsleitung (12) und über ein Leckageventil (5), mit der ersten Arbeitsleitung (13) verbindbar ist, wenn die jeweilige Arbeitsleitung (12, 13) drucklos ist.

## Claims

1. Hydraulic control device for a multi-gear vehicle transmission with gear actuators (3, 4), allocated to the individual gears and pressurized by a pressure medium via a gear shift valve (2), and equipped with a locking valve (1) arranged between gear shift valve (2) and gear actuators (3, 4), and which locks the pressure medium flow of the corresponding gear actuators (3, 4) above a permissible road speed for the individual gear engaged, and which retains the pressure medium flow of the gear actuator (3) of the engaged gear by means of a change-over valve (6), although the gear shift valve (2) releases the pressure medium for the locked gear, and is equipped with a low pressure pump (20), driven dependent on the vehicle speed, and a control spool valve (26) of the locking valve (1), pressurized at a level depending on vehicle speed, with this control spool valve (26) being displaced against the force of the control spring (33) from one first end position to the second position, above a specified vehicle-speed dependent pressure, **characterized in that** a first operating line (12) and a second operating line (13) leading from the shift valve (2) into a first (14) and a second annular duct (15) of a valve cylinder (27) of the locking valve (1) and connected with a third (18) and a fourth annular duct (19) in a control spring (33) determined end- position of the control spool valve (26) via a first (36) and a second control groove (37) in the control spool valve (26), from which a first (16) and a second connecting line (17) leads to the first (3) and the second gear actuator (4), and that the annular ducts (14, 18) are connected to the change-over valve (6), which, in the second end-position of the control spool valve (26),during pressurization via the first (12) or the second operating line (13),feeds the pressure medium to the first gear actuator (3) in order to engage the higher gear with the lower reduction ratio.

2. Control device according to claim 1, **characterized in that** on one face-end of the control spool valve (26) the valve cylinder (27) of the locking valve (1) forms a low- pressure chamber (23), which is connected via a low-pressure duct (24) to a low-pressure pump (20), and that a pressure-limiting valve determines low pressure maximum.

3. Control device according to claims 1 or 2, **characterized in that** the control-spool valve (26) between the low-pressure chamber (23) and the first control groove (36) has a sealing (44), and that between this and the first control groove (36) a pressure relief groove (45) is provided, which is connectable via holes (46) with the pressure medium reservoir (11).

4. Control device according to claim 3, **characterized in that** the control spring (33) is located in a spring chamber (29) of the control spool valve (26), which is connected with holes (46) and supported on the valve cylinder (27) via a face-end opening.

5. Control device according to claim 1, **characterized in that** the second connecting line (17) can be connected via a recoil valve (8) with the second operating line (12), and via a leakage valve (5) with the first operating line (13), if the respective operating line (12, 13) is not pressurized.

## Revendications

1. Système de changement de vitesse hydraulique pour une boîte de véhicule à plusieurs vitesses, comportant des moyens d'actionnement de vitesse (3, 4) qui sont associés à des vitesses séparées et qui sont alimentés en milieu sous pression par l'intermédiaire d'une vanne de changement de vitesse (2), et comportant une vanne de blocage (1) qui est branchée entre la vanne de changement de vitesse (2) et les moyens d'actionnement de vitesse (3, 4) et qui bloque l'alimentation en milieu sous pression du moyen d'actionnement de vitesse (3, 4) correspondant au-dessus d'une vitesse de véhicule admise pour la vitesse respective à enclencher et qui maintient l'alimentation en milieu sous pression du moyen d'actionnement de vitesse (3) de la vitesse enclenchée bien que la vanne d'enclenchement de vitesse (2) libère le milieu sous pression pour la vitesse bloquée, et comportant une pompe à basse pression (20) qui est entraînée en fonction de la vitesse du véhicule et qui alimente un coulisseau de commande (26) de la vanne de blocage (1) avec une pression qui dépend de la vitesse du véhicule, et bien que ce coulisseau de commande (26) soit déplacé d'une première position extrême vers la seconde à l'encontre de la force du ressort de réglage (33) au-delà d'une pression prédéterminée qui dépend de la vitesse du véhicule,
*caractérisé en ce que*
une première conduite de travail (12) et une seconde (13), partant de la vanne d'enclenchement (2), débouchent dans un premier canal annulaire (14) et un second (15), d'un cylindre de vanne (27) de la vanne de blocage (1), qui sont reliés, dans la position extrême du coulisseau de commande (26) déterminée par le ressort de réglage (33), par l'intermédiaire d'une première rainure de commande (36) et d'une seconde (37) du coulisseau de commande (26) à un troisième canal annulaire (18) et à un quatrième (19) à partir desquels une première conduite de liaison (16) et une seconde (17) mènent au premier moyen d'actionnement de vitesse (3) et au second (4), et en ce qu'aux canaux annulaires (14, 18) est raccordée la vanne de sélection (6) qui amène, dans la seconde position extrême du coulisseau de commande (26) lors d'une alimentation en pression par l'intermédiaire de la première conduite de travail (12) ou de la seconde (13), du milieu sous pression vers le premier moyen d'actionnement de vitesse (3) pour la vitesse supérieure avec la démultiplication inférieure.

2. Système de changement de vitesse suivant la revendication 1, caractérisé en que sur le côté frontal du coulisseau de commande (26), le cylindre de vanne (24) de la vanne de blocage (1) forme une chambre à basse pression qu'un canal à basse pression (24) relie à la pompe à basse pression (20) et en ce qu'une vanne de limitation de pression détermine la basse pression maximale.

3. Système de changement de vitesse suivant la revendication 1 ou 2, caractérisé en que le coulisseau de commande (26) présente entre la chambre à basse pression (23) et la première rainure de commande (36) un joint d'étanchéité (44) et en ce qu'il est prévu entre celui-ci et la première rainure de commande (36) une rainure de décharge (45) qui peut être reliée par des trous (46) au réservoir de stockage (11) de milieu sous pression.

4. Système de changement de vitesse suivant la revendication 3, caractérisé en que le ressort de réglage (33) est logé dans une chambre à ressorts (29), du coulisseau de commande (26), qui est en liaison avec les trous (46), et en ce qu'il s'appuie sur le cylindre de vanne (27) à travers une ouverture du côté frontal.

5. Système d'enclenchement suivant la revendication 1, caractérisé en que la seconde conduite de liaison (17) peut être reliée, par l'intermédiaire d'une vanne de retour (8), à la seconde conduite de travail (12) et, par l'intermédiaire d'une vanne de vidange (5), à la première conduite de travail (13) lorsque la conduite de travail respective (12, 13) est sans pression.
